# FASCICULE DE BREVET EUROPEEN

(11) **EP 1 590 713 B1**
(45) Date de publication et mention de la délivrance du brevet: **08.11.2006**
(21) Numéro de dépôt: 04707562.7
(22) Date de dépôt: 03.02.2004
(51) Int. Cl.: G05B 19/414, B25J 9/16

(54) **ROBOT MULTI-AXES EQUIPE D'UN SYSTEME DE COMMANDE**
MEHRACHSENROBOTER MIT EINEM STEUERSYSTEM
MULTI-AXIS ROBOT PROVIDED WITH A CONTROL SYSTEM

(30) Priorité: 04.02.2003 FR 0301264
(43) Date de publication de la demande: 02.11.2005
(73) Titulaire: STÄUBLI FAVERGES, 74210 Faverges (FR)
(72) Inventeur: GERAT, Vincent, F-74410 Saint Jorioz (FR); PERILLAT, Pierre, F-74940 Annecy-le-Vieux (FR); BONNET DES TUVES, Jean-Michel, F-74210 Saint Ferreol (FR)
(74) Mandataire: Colombo, Michel
(86) Numéro de dépôt international: PCT/FR2004/000245
(87) Numéro de publication internationale: WO 2004/079464

(56) Documents cités:
- EP-A- 0 777 167
- EP-A- 0 881 551
- US-A- 4 794 513
- US-A- 4 878 002
- US-A- 6 091 219
- KHOSLA P ET AL: "A NOVEL TECHNOLOGY FOR MANIPULATORS: RECONFIGURABLE SYSTEMS" ADVANCES IN INSTRUMENTATION, INSTRUMENT SOCIETY OF AMERICA, RESEARCH TRIANGLE PARK, US, vol. 43, no. PART 4, 1988, pages 1763-1774, XP000052734
- PATENT ABSTRACTS OF JAPAN vol. 1998, no. 11, 30 septembre 1998 (1998-09-30) -& JP 10 178437 A (TAMAGAWA SEIKI CO LTD), 30 juin 1998 (1998-06-30)
- SCHNEIDER G: "FEUERPROBE BESTANDEN. PC-TECHNOLOGIE IN DER ROBOTER- STEUERUNGSTECHNIK ERFORGREICH EINGEFUEHRT" ELEKTRONIK, FRANZIS VERLAG GMBH. MUNCHEN, DE, vol. 47, no. 8, 14 avril 1998 (1998-04-14), pages 82,84,86-88, XP000780193 ISSN: 0013-5658

## Description

L'invention a trait à un robot multi-axes équipé d'un système de commande.

Il est connu que les robots multi-axes peuvent être commandés en fournissant à leurs moteurs électriques des signaux de commande générés à partir d'une unité de calcul et de traitement dans laquelle est déterminée la trajectoire du robot. Pour que le calcul de trajectoire soit efficace, il est connu, par exemple de US-A-4, 786, 847 de faire travailler l'unité précitée en boucle fermée, en utilisant des signaux de contre-réaction provenant de capteurs de position portés par le bras du robot. Dans les robots connus, un grand nombre de câbles doivent être installés entre le bras et son unité de commande, ce qui induit des temps de connexion et de câblage importants et des risques d'erreur non négligeables induisant des opérations de déboguage complexes et coûteuses.

Il est connu de EP-A-0 777 167 d'utiliser un bus en fibres optiques pour connecter un contrôleur numérique à des amplificateurs reliés chacun à un codeur par une ligne classique. Ces liaisons entre les amplificateurs et les codeurs rend longue et complexe l'installation de ces matériels.

Par ailleurs, JP-A-10 178 437 prévoit de relier par un bus des codeurs à un ordinateur externe et ce, indépendamment de la partie de puissance de l'installation.

C'est à ces inconvénients qu'entend plus particulièrement remédier l'invention en proposant une nouvelle architecture pour un robot équipé d'un système de commande qui simplifie la fabrication du contrôleur, d'une part, et du bras, d'autre part, et l'installation de ce robot sur son site d'utilisation. L'invention vise également à améliorer la qualité et la vitesse de transfert des signaux de contrôle et de contre-réaction.

Dans cet esprit, l'invention concerne un robot multi-axes comportant un bras apte à déplacer un outil dans l'espace et actionné par des moteurs électriques, ainsi qu'un système de commande comprenant :
- un contrôleur qui inclut au moins un module de puissance permettant l'alimentation en courant des moteurs et au moins une unité de calcul et de traitement permettant, notamment, le calcul de trajectoire du bras et la génération de signaux de contrôle du ou des modules précités ;
- des moyens de liaison entre le bras, le ou les modules de puissance et l'unité précitée, ces moyens de liaison permettant au moins l'alimentation des moteurs à partir du ou des modules de puissance et le contrôle de ce ou ces modules par l'unité de calcul et de traitement, ainsi que la transmission de signaux de contre-réaction du bras vers cette unité et/ou ce ou ces modules.

Ce système est caractérisé en ce que les moyens de liaison précités comprennent un bus fonctionnel unique qui relie une unité de contrôle associée à l'unité de calcul et de traitement, d'une part, au(x) module(s) de puissance et, d'autre part, à au moins une interface numérique avec au moins un capteur de position embarqué sur le bras, cette interface étant intégrée au bras ou située dans son voisinage immédiat.

Grâce à l'invention, les informations de contre-réaction relatives à la position et à la vitesse des éléments mobiles du robot ainsi qu'au courant consommé par les différents moteurs sont disponibles pour l'unité de calcul et de traitement à la fréquence du bus. En outre, les signaux numériques transitant dans le bus sous forme numérique sont peu perturbés par le bruit ambiant, à la différence de signaux analogiques. Une optimisation du contrôle de trajectoire est obtenue par le traitement centralisé des boucles d'asservissement. L'utilisation de la ou des interface(s) permet de mettre en série ou « sérialiser » des informations provenant de capteurs numériques ou de numériser et de sérialiser des informations provenant de capteurs analogiques, puis de les faire transiter vers le bus série. L'invention permet de conserver les avantages d'un système centralisant fonctionnellement la génération de trajectoire et les asservissements. La ou les interface(s) permet(tent) également de calculer, au plus près des capteurs ou codeurs, les vitesses et/ou accélérations des parties mobiles, à une fréquence multiple de celle du bus, ce qui permet de réduire le retard entre l'information de position, de vitesse et/ou d'accélération, en vue d'un meilleur asservissement. Le fait d'utiliser un bus fonctionnel minimise le nombre de câbles conducteurs dans l'installation, en particulier à l'intérieur du bras, d'où une meilleure implantation du ou des câbles de connexion, des contraintes dimensionnelles allégées pour les éléments du bras, une meilleure accessibilité aux éléments inclus dans ce bras et une facilité d'obtention de la mobilité de ce bras car le rayon de courbure minimum du bus peut être relativement faible. Le robot conforme à l'invention est plus économique à concevoir et à fabriquer et peut bénéficier d'algorithmes qui le rendent plus rapide et plus précis que ceux de l'art antérieur.

Selon un aspect tout à fait avantageux de l'invention, le bus fonctionnel unique se décompose en au moins deux bus structurels qui relient, pour le premier, l'unité de contrôle au(x) module(s) de puissance et, pour le second ou les deuxième et suivants, l'unité de contrôle à l'interface ou aux interfaces. Le fait d'avoir au moins deux bus structurels distincts permet d'adapter chacun de ces bus au lieu dans lequel il est installé : le premier bus peut être métallique, notamment en cuivre, alors qu'un autre bus peut, par exemple, être en fibres optiques, ce type de bus étant particulièrement immunisé par rapport aux bruits électromagnétiques ambiants et pouvant être de grande longueur tout en conservant une grande rapidité. Le fait d'utiliser plusieurs bus structurels permet de contourner le problème dû aux limites de leur bande passante pour ajouter, en cas de besoin, plus d'éléments ou plus d'informations traitées par élément.

De façon avantageuse, l'unité de contrôle est reliée à l'unité de calcul et de traitement par un bus de type PCI (« Peripheral Component Interconnect »). En variante, l'unité de contrôle est intégrée à l'unité de calcul et de traitement.

Une carte d'identification et de calibration peut être embarquée sur le bras ou située dans son voisinage immédiat, cette carte étant intégrée au bus. Ceci permet de télécharger aisément vers l'unité de calcul et de traitement les paramètres propres au robot. On peut ainsi parler de connexion « plug and play ».

Le ou chaque bus structurel peut être apte à être étendu par des moyens de connexion complémentaires à au moins un organe externe, tel qu'un septième axe, notamment un axe de convoyeur, ou tout organe traitant de l'information, comme un dispositif de sécurité.

Les moyens de liaison peuvent comprendre, en outre, un conducteur de puissance reliant le ou les modules précités au robot, indépendamment du bus fonctionnel.

Le premier bus structurel est avantageusement raccordé directement ou indirectement à des modules de puissance dédiés chacun à un moteur du robot. On peut, en outre, prévoir que l'interface précitée est une carte d'interface apte à calculer la vitesse et/ou l'accélération du mouvement mesuré par le ou chaque capteur associé, à sérialiser son signal de sortie et, éventuellement, à numériser préalablement les signaux de sortie du ou des capteurs lorsqu'ils sont analogiques. En variante, l'interface en question est intégrée au capteur associé, avec les mêmes fonctions que ci-dessus.

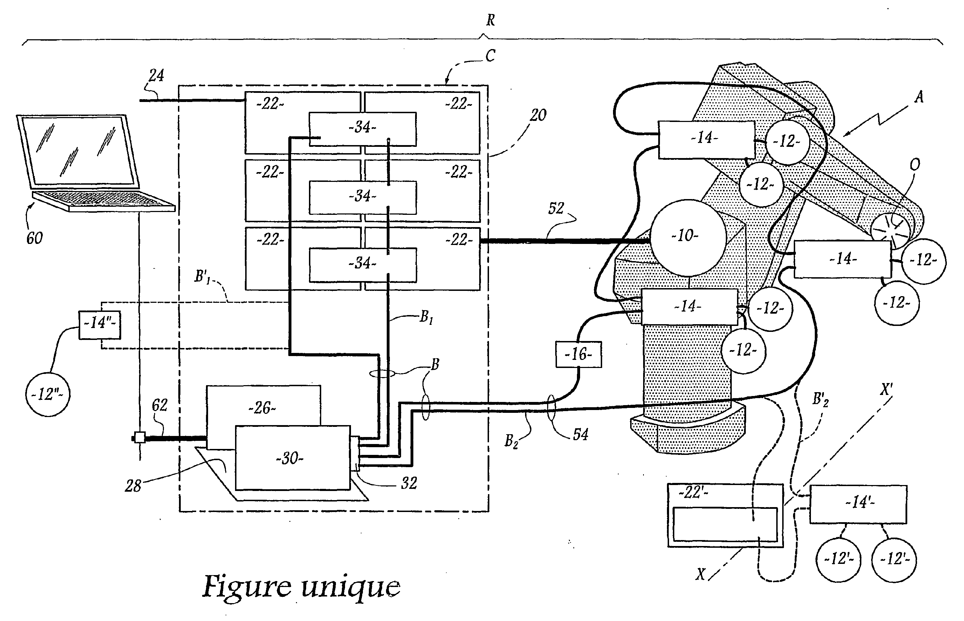

L'invention sera mieux comprise et d'autres avantages de celle-ci apparaîtront plus clairement à la lumière de la description qui va suivre d'un mode de réalisation d'un robot multi-axes et de son système de commande conformes à l'invention, donné uniquement à titre d'exemple et faite en référence au dessin annexé dans lequel la figure unique est une représentation schématique de principe d'un système de commande et d'un robot multi-axes associés.

Le bras A du robot R représenté sur la figure est disposé le long d'un trajet de convoyage figuré par une direction X-X'. Ce bras est pourvu de six moteurs aptes à mouvoir chacun une partie mobile du bras autour d'un de ses six axes pour déplacer un outil O dans l'espace. Ces moteurs sont représentés par un ensemble de motorisation 10 sur la figure. En pratique, ils sont répartis à l'intérieur du bras A. Six capteurs ou codeurs de position analogiques 12 sont répartis dans le robot R et permettent de mesurer les déplacements du bras autour de chacun de ses six axes.

Trois cartes d'interface 14 sont montées sur le bras A et sont associées chacune à deux capteurs 12. Chaque carte 14 permet de numériser et de sérialiser le signal analogique de sortie d'un capteur ou codeur 12. Chaque carte 14 permet également de calculer la dérivée première et/ou la dérivée seconde du signal ainsi généré, ce qui permet de déterminer la vitesse et/ou l'accélération correspondante pour la partie mobile concernée du robot R. Comme les cartes 14 sont situées à proximité des capteurs ou codeurs 12, les calculs de dérivés peuvent être effectués avec une fréquence élevée, de l'ordre de 20 kHz, alors que les trames d'information sont transmises à 10 kHz.

En pratique, les cartes 14 peuvent être, selon les choix de construction, intégrées aux capteurs 12, communes à deux capteurs et réparties dans le bras A, comme représenté, ou disposées au pied du bras A. Une seule carte peut constituer les différentes cartes 14 sus-mentionnées.

Le robot R inclut également un contrôleur C de commande du bras A, ce contrôleur comprenant une enveloppe 20 dans laquelle sont logés six modules de puissance 22 alimentés en courant par un câble 24. Chaque module 22 est dédié à l'un des moteurs du bras A, ces six modules 22 étant reliés au bras A par un premier câble de liaison 52, à dix-huit conducteurs. En pratique, les moteurs du sous-ensemble 10 sont des moteurs triphasés et chaque module 22 est relié au moteur correspondant par trois conducteurs.

Une unité de calcul et de traitement 26, couramment dénommée « CPU », est également disposée dans l'enveloppe 20 et est reliée par un bus PCI 28 à une carte de contrôle 30 pourvue d'une interface 32.

En variante, la carte 30 peut être intégrée à la carte 26.

Un ordinateur portable externe 60 peut être relié par une liaison Ethernet 62 à l'unité 26 en vue de sa programmation et/ou de la visualisation de ses paramètres de fonctionnement.

L'unité 26 permet de calculer la trajectoire du robot R et de générer des signaux de commande de chacun des modules 22 qui commandent eux-mêmes chacun un moteur du sous-ensemble 10. Pour commander ces modules 22 en tenant compte du comportement réel du bras A, l'ensemble formé des éléments 26 à 30 est relié par un bus fonctionnel unique B, d'une part, à trois cartes 34 contrôlant chacune deux modules 22 et, d'autre part, aux trois cartes d'interface 14.

Le bus B se décompose en deux bus structurels B₁ et B₂.

Le bus B₁, réalisé en cuivre et contenu dans l'enveloppe 20, permet de faire transiter vers les cartes 34 les signaux de commande des modules 22 et, par là, de contrôler les moteurs du sous-ensemble 10. Des informations circulent également des cartes 34 vers la carte 30 à travers le bus B₁.

Le second bus structurel B₂ est formé par des fibres optiques et comprend un câble 54 de liaison entre l'interface 32 et une carte 16 d'identification et de calibration montée à proximité du pied du bras A, cette carte 16 étant reliée, en série, par le second bus B₂ à chacune des cartes 14.

Le fait que le bus B₂ est réalisé en fibres optiques, permet de l'immuniser contre les perturbations électromagnétiques pouvant résulter du fonctionnement des moteurs du sous-ensemble 10 ou des codeurs 12.

Pour l'unité 26, les deux bus structurels B₁ et B₂ forment un unique bus fonctionnel B avec lequel elle interagit, à travers la carte 30, pour émettre ou recevoir des signaux de contrôle.

Compte tenu de l'utilisation des bus structurels B₁ et B₂, la transmission d'informations à la carte de contrôle 30 est particulièrement rapide, en pratique réalisée avec une périodicité inférieure à 100 micro-secondes. Les informations transitent de façon également rapide entre les éléments 26 et 30, ceci à travers le bus PCI 28.

Comme représenté en traits pointillés sur la figure, le bus structurel B₂ peut être ouvert pour intégrer des moyens de connexion complémentaires B'₂ pour le contrôle d'un axe externe, tel qu'un axe convoyeur, avec un module de puissance 22', deux capteurs 12' et une carte d'interface 14'.

De même, des moyens de connexion B'₁ peuvent permettre de relier le bus B₁ à une carte d'interface 14" associée à un capteur 12", par exemple au sein d'un dispositif de sécurité.

Ainsi, l'invention confère au système de commande une grande flexibilité permettant de l'adapter à son environnement de travail. En particulier, il n'est pas nécessaire d'ajouter des câbles à la liaison entre le contrôleur C et le bras A lorsque le contrôle d'un axe externe doit être ajouté.

L'installation du robot R et de son système de commande est particulièrement aisée car les informations stockées sur la carte 16 permettent d'envisager une reconnaissance du robot R par le contrôleur C lors du branchement du bus B₂ entre l'interface 32 et cette carte 16.

L'invention permet de diminuer sensiblement les coûts de conception, de fabrication et de câblage du système de commande d'un robot, alors que les informations collectées, en particulier en ce qui concerne les positions, vitesses et accélérations des parties mobiles du robot, sont disponibles aussi rapidement et avec plus de précision que dans les dispositifs les plus performants à système structurellement centralisé avec bus parallèle.

L'invention a été représentée avec un bus fonctionnel formé de deux bus structurels B₁ et B₂. Cependant, un seul bus ou, au contraire, plus de deux bus structurels peuvent être prévus.

L'invention n'est pas limitée aux robots équipés de capteurs de position analogiques. Elle peut être mise en oeuvre avec des capteurs numériques, auquel cas l'interface réalisée par les cartes 14 de l'exemple décrit peut être intégrée à chaque capteur.

La carte d'identification et de calibration 16 peut être prévue dans le contrôleur C et non pas au niveau du bras A, auquel cas les éléments A et C sont appariés car c'est la carte 16 qui permet à l'unité 26 de « reconnaître » le bras A.

## Revendications

1. Robot multi-axes comportant un bras (A) apte à déplacer un outil (0) dans l'espace et actionné par des moteurs électriques (10), ainsi qu'un système de commande comprenant :
- un contrôleur (C) qui inclut au moins un module de puissance (22) permettant l'alimentation en courant desdits moteurs (10) et au moins une unité (26) de calcul et de traitement permettant, notamment, le calcul de trajectoire du bras (A) et la génération de signaux de contrôle desdits modules,
- des moyens de liaison (52, B) entre ledit bras, ledit module de puissance et ladite unité permettant au moins l'alimentation desdits moteurs à partir dudit module, **caractérisé :**
- **en ce que** lesdits moyens de liaison (52, B) comprennent un ensemble d'un seul ou de plusieurs bus structurels (B₁, B₂) qui relie une unité de contrôle (30) associée à ladite unité de calcul et de traitement (26), d'une part, audit module (22) et, d'autre part, à au moins une interface numérique (14) avec au moins un capteur de position (12) embarqué sur ledit bras (A), ladite interface étant intégrée audit bras ou déposée au pied du bras,
- **en ce que** cet ensemble forme un bus fonctionnel unique permettant le contrôle dudit module par ladite unité de calcul et la transmission de signaux de contre-réaction dudit bras vers ladite unité et/ou ledit module de puissance, à la fréquence du bus fonctionnel unique.

2. Robot selon la revendication 1, **caractérisé en ce que** ledit bus fonctionnel unique (B) se décompose en au moins deux bus structurels (B₁, B₂) qui relient, pour le premier, ladite unité de contrôle (30) audit module (22) et, pour le second (B₂) ou les suivants, ladite unité de contrôle (30) à ladite interface (14).

3. Robot selon la revendication 2, **caractérisé en ce que** ledit premier bus structurel est un bus métallique (B₁), notamment en cuivre.

4. Robot selon l'une des revendications 2 ou 3, **caractérisé en ce que** ledit second bus structurel ou l'un desdits autres bus est un bus (B₂) en fibres optiques.

5. Robot selon l'une des revendications précédentes, **caractérisé en ce que** ladite unité de contrôle (30) est reliée à ladite unité de calcul et de traitement (26) par un bus de type PCI (28).

6. Robot selon l'une des revendications 1 à 4, **caractérisé en ce que** ladite unité de contrôle (30) est intégrée à ladite unité de calcul et de traitement (26).

7. Robot selon l'une des revendications précédentes, **caractérisé en ce qu'**il comprend une carte d'identification et de calibration (16) embarquée sur ledit bras (A), ladite carte étant intégrée audit bus fonctionnel (B).

8. Robot selon l'une des revendications précédentes, **caractérisé en ce que** le ou chaque bus structurel (B₁, B₂) est apte à être étendu par des moyens de connexion complémentaires (B'₁, B'₂) pour interagir avec au moins un organe externe (12', 12", 14', 14", 22') traitant de l'information.

9. Robot selon l'une des revendications précédentes, **caractérisé en ce que** lesdits moyens de liaison comprennent également un conducteur de puissance (52) reliant ledit ou lesdits modules (22) audit bras (A), indépendamment dudit bus fonctionnel (B).

10. Robot selon l'une des revendications précédentes, **caractérisé en ce que** ledit premier bus structurel (B₁) est raccordé directement ou indirectement à des modules de puissance (22) dédiés chacun à un moteur dudit robot (R).

11. Robot selon l'une des revendications précédentes, **caractérisé en ce que** ladite interface numérique est une carte d'interface (14) apte à calculer la vitesse et/ou l'accélération du mouvement mesuré par le ou chaque capteur associé (12) à sérialiser son signal de sortie et, éventuellement, à numériser les signaux de sortie dudit ou desdits capteurs lorsqu'ils sont analogiques.

12. Robot selon l'une des revendications 1 à 10, **caractérisé en ce que** ladite interface est intégrée au capteur associé et est apte à calculer la vitesse et l'accélération du mouvement mesuré par ledit capteur, à sérialiser son signal de sortie et, éventuellement, à numériser le signal de sortie dudit capteur lorsqu'il est analogique.

## Claims

1. Multi-axis robot comprising an arm (A) capable of moving a tool (O) in space and actuated by electric motors (10), as well as a control system comprising:
- a controller (C) which includes at least one power module (22) allowing current to be supplied to said motors (10) and at least one calculation and processing unit (26) used in particular to compute the path of the arm (A) and generate control signals for said modules,
- link means (52, B) between said arm, said power module and said unit permitting at least said motors to be supplied from said module,
**characterised**
- **in that** said link means (52, B) comprise an assembly of one or more structural buses (B₁, B₂) which link a control unit (30) associated with said calculation and processing unit (26), on the one hand, to said module (22) and, on the other hand, to at least one digital interface (14) with at least one position sensor (12) fitted on said arm (A), said interface being integrated into said arm or placed at the foot of the arm,
- **in that** this assembly forms a single functional bus permitting said module to be controlled by said calculation unit and feedback signals to be transmitted from said arm to said unit and/or said power module, at the frequency of the single functional bus.

2. Robot according to claim 1, **characterised in that** said single functional bus (B) is divided into at least two structural buses (B₁, B₂) which link, in the case of the first, said control unit (30) to said module (22) and, in the case of the second (B₂) or subsequent buses, said control unit (30) to said interface (14).

3. Robot according to claim 2, **characterised in that** said first structural bus is a metallic bus (B₁), especially made of copper.

4. Robot according to one of claims 2 or 3, **characterised in that** said second structural bus or one of said other buses is a bus (B₂) made of optical fibres.

5. Robot according to one of the preceding claims, **characterised in that** said control unit (30) is linked to said calculation and processing unit (26) by a PCI type bus (28).

6. Robot according to one of claims 1 to 4, **characterised in that** said control unit (30) is integrated into said calculation and processing unit (26).

7. Robot according to one of the preceding claims, **characterised in that** it comprises an identification and calibration card (16) fitted on said arm (A), said card being integrated into said functional bus (B).

8. Robot according to one of the preceding claims, **characterised in that** the or each structural bus (B₁, B₂) is capable of being extended by additional connection means (B'₁, B'₂) to interact with at least one external unit (12', 12", 14', 14", 22') processing information.

9. Robot according to one of the preceding claims, **characterised in that** said link means also comprise a power conductor (52) linking said module or modules (22) to said arm (A), independently of said functional bus (B).

10. Robot according to one of the preceding claims, **characterised in that** said first structural bus (B₁) is connected directly or indirectly to power modules (22), each dedicated to a motor of said robot (R).

## Patentansprüche

1. Mehrachsenroboter, einen Arm (A), der geeignet ist, ein Werkzeug (O) im Raum zu verschieben und der von elektrischen Motoren (10) betätigt wird, sowie ein Steuersystem enthaltend, das umfasst:
- eine Steuereinrichtung (C), die mindestens einen Leistungsmodul (22), der die Stromversorgung der Motoren (10) ermöglicht, und eine Berechnungs- und Bearbeitungseinheit (26) einschließt, die insbesondere die Berechnung der Wege des Arms (A) und die Erzeugung von Signalen zur Steuerung der Module ermöglicht,
- Verbindungsmittel (52, B) zwischen dem Arm, dem Leistungsmodul und der Einheit, die zumindest die Versorgung der Motoren aus dem Modul gestatten, **dadurch gekennzeichnet,**
- **dass** die Verbindungsmittel (52,B) eine Gesamtheit eines einzigen oder mehrerer Strukturbusse (B₁, B₂) umfassen, die eine der Berechnungs- und Bearbeitungseinheit zugeordnete Steuereinheit (30) einerseits mit dem Modul (22) und andererseits mit mindestens einer numerischen Schnittstelle (14) mit mindestens einem auf dem Arm (A) mitgeführten Positionssensor (12) verbinden, wobei die Schnittstelle im Arm integriert oder am Fuß des Armes angeordnet ist,
- **dass** diese Gesamtheit einen einzigen Funktionsbus bildet, der die Steuerung des Moduls durch die Berechnungseinheit und die Übertragung von Signalen der Gegenreaktion des Armes zu der Einheit und/oder dem Leistungsmodul in der Frequenz des einzigen Funktionsbusses gestattet.

2. Roboter nach Anspruch 1, **dadurch gekennzeichnet, dass** der einzige Funktionsbus (B) sich in mindestens zwei Strukturbusse (B₁, B₂) aufteilt, die, für den ersten (B₁), die Steuereinheit (30) mit dem Modul (22) und, für den zweiten (B₂) oder dem folgenden, die Steuereinheit (30) mit der Schnittstelle verbinden.

3. Roboter nach Anspruch 2, **dadurch gekennzeichnet, dass** der erste Strukturbus ein Bus (B₁) aus Metall, vorzugsweise Kupfer, ist.

4. Roboter nach einem der Ansprüche 2 oder 3, **dadurch gekennzeichnet, dass** der zweite Strukturbus oder einer der anderen Busse ein Bus (B₂) aus optischen Fasern ist.

5. Roboter nach einem der vorhergehenden Ansprüche, **dadurch gekennzeichnet, dass** die Steuereinheit (30) durch einen PCI Bus (28) mit der Berechnungs- und Bearbeitungseinheit (26) verbunden ist.

6. Roboter nach einem der Ansprüche 1 bis 4, **dadurch gekennzeichnet, dass** die Steuereinheit (30) in der Berechnungs- und Bearbeitungseinheit (26) integriert ist.

7. Roboter nach einem der vorhergehenden Ansprüche, **dadurch gekennzeichnet, dass** er eine Identifikations- und Kalibrierkarte (16) umfasst, die auf dem Arm (A) mitgeführt wird, wobei die Karte in dem Funktionsbus (B) integriert ist.

8. Roboter nach einem der vorhergehenden Ansprüche, **dadurch gekennzeichnet, dass** der oder jeder Strukturbus (B₁, B₂) geeignet ist, durch komplementäre Anschlussmittel (B₁', B₂') erweitert zu werden, um mit mindestens einem externen Organ (12', 12", 14', 14", 22') zur Behandlung von Informationen zusammenzuwirken.

9. Roboter nach einem der vorhergehenden Ansprüche, **dadurch gekennzeichnet, dass** die Verbindungsmittel gleichfalls einen Leistungsleiter (52) umfassen, der den oder die Module (22) mit dem Arm (A) unabhängig vom Funktionsbus (B) verbindet.

10. Roboter nach einem der vorhergehenden Ansprüche, **dadurch gekennzeichnet, dass** der erste Strukturbus (B₁) direkt oder indirekt an Leistungsmodulen (22) angeschlossen ist, die jeweils einem Motor des Roboters (R) zugeordnet sind.
